# EUROPEAN PATENT APPLICATION

(11) **EP 2 746 913 A1**
(43) Date of publication of application: **25.06.2014**
(21) Application number: 13802847.7
(22) Date of filing: 08.04.2013
(51) Int. Cl.: G06F 3/048

(54) **METHOD AND DEVICE FOR SWITCHING MULTIPLE MESSAGE RESPONSE WINDOWS**

(30) Priority: 18.10.2012 CN 201210396688
(71) Applicant: Huawei Technologies Co., Ltd., Shenzhen, Guangdong 518129 (CN)
(72) Inventor: ZHU, Jianping, Shenzhen, Guangdong 518129 (CN); ZHOU, Hongkai, Shenzhen, Guangdong 518129 (CN)
(74) Representative: Pfenning, Meinig & Partner GbR
(86) International application number: PCT/CN2013/073866
(87) International publication number: WO 2014/059770

(57) **Abstract**

Embodiments of the present invention provide a method and an apparatus for switching among multiple message reply windows. The method includes: presenting multiple message reply windows, where a message reply window placed on the top is used to display a message of a user at a peer end and is further used to receive a reply message for the presented message of the user at the peer end; and automatically switching, according to an ordered queue of the multiple message reply windows, the first message reply window in the ordered queue to the message reply window placed on the top, where the ordered queue is generated by ordering the multiple message reply windows in a customized ordering manner.

## Description

### TECHNICAL FIELD

The present invention relates to the computer field, and in particular, to a method and an apparatus for switching among multiple message reply windows.

### BACKGROUND

As Internet behaviors are prevailing and service capabilities of customer service personnel are improving, one customer service person tends to provide online customer services and other answering and consultation services through multiple message reply windows concurrently. As a result, a requirement for timely responding to customers' online talks/emails/short messages/ left messages and the like becomes increasingly higher.

Currently, online customer services are taken as an example. In a mode where one customer service person concurrently serves multiple message reply windows, the customer service person manually determines or selects a user to respond to. In a case where one customer service person concurrently serves multiple message reply windows, if the customer service person still manually or mechanically responds to customers, it is relatively difficult to answer the customers, and fatigue of a customer representative is increased. This affects service efficiency and service mood of the customer service person, and severely affects outside customer experience, which even causes a customer to give up a current service, thereby indirectly affecting operation performance.

### SUMMARY

Embodiments of the present invention provide a method and an apparatus for switching among multiple message reply windows to improve work efficiency of a customer service person.

In one aspect, an embodiment of the present invention provides a method for switching among multiple message reply windows. The method includes: presenting multiple message reply windows, where a message reply window placed on the top is used to display a message of a user at a peer end and is further used to receive a reply message for the presented message of the user at the peer end; and automatically switching, according to an ordered queue of the multiple message reply windows, the first message reply window in the ordered queue to the message reply window placed on the top, where the ordered queue is generated by ordering the multiple message reply windows in a customized ordering manner.

In a first implementation manner of the first aspect, that the ordered queue is generated by ordering the multiple message reply windows in a customized ordering manner includes that the ordered queue is generated by ordering the multiple message reply windows according to an ordering indicator, where one of: a customer rating, a message type, a customer group, a customer waiting duration, and a black/white list is used as the ordering indicator.

In a second implementation manner of the first aspect, the method further includes automatically adjusting the ordering indicator according to statistics on effects of using the message reply window for a period of time.

In a third implementation manner of the first aspect, that the ordered queue is generated by ordering the multiple message reply windows in a customized ordering manner includes that the ordered queue is generated by ordering the multiple message reply windows according to ordering indicators, where at least two of: a customer rating, a message type, a customer group, a customer waiting duration, and a black/white list are used as the ordering indicators.

In a fourth implementation manner of the first aspect, any one indicator of the at least two indicators includes a corresponding indicator weight, each ordering indicator among the customer rating, the message type, the customer group, the customer waiting duration, and the black/white list includes a score, and that the ordered queue is generated by ordering the multiple message reply windows according to at least two indicators among a customer rating, a message type, a customer group, a customer waiting duration, and a black/white list specifically includes that the ordered queue is generated by ordering the multiple message reply windows according to a weighted sum of scores of the at least two indicators among the customer rating, the message type, the customer group, the customer waiting duration, and the black/white list.

In a fifth implementation manner of the first aspect, the method further includes automatically adjusting a score of an ordering indicator among the customer rating, the message type, the customer group, the customer waiting duration, and the black/white list according to statistics on effects of using the message reply window for a period of time.

In a sixth implementation manner of the first aspect, after the automatically switching, according to an ordered queue of the message reply windows, the first message reply window in the ordered queue to the message reply window placed on the top, the method further includes reselecting the ordering indicator or updating a weight included in the ordering indicator according to a setting.

In a seventh implementation manner of the first aspect, the method further includes inserting, in a customized ordering manner and in the ordering manner, a message reply window corresponding to a message received from a customer at a peer end into the ordered queue of the multiple message reply windows if the message of the customer at the peer end is received and the message reply window corresponding to the message of the customer is not included in the ordered queue of the multiple message reply windows.

In an eighth implementation manner of the first aspect, before the automatically switching, according to an ordered queue of the message reply windows, the first message reply window in the ordered queue to the message reply window placed on the top, the method further includes receiving a trigger message for automatically switching the message reply window.

In a ninth implementation manner of the first aspect, the message reply window includes a key for automatically switching a window, and the receiving a trigger message of a user for automatically switching the message reply window includes: receiving, by receiving a mouse click operation, a single-point or multipoint touch operation, or a stylus pen click operation on the key for automatically switching a window, a trigger message of a user for automatically switching the message reply window.

In a second aspect, an embodiment of the present invention provides an apparatus for switching among multiple message reply windows. The apparatus includes a presenting module, a switching module, and an ordering module. The presenting module is configured to present multiple message reply windows, where a message reply window placed on the top is used to display a message of a user at a peer end and is further used to receive a reply message for the presented message of the user at the peer end; the ordering module is configured to order the multiple message reply windows in a customized ordering manner to generate an ordered queue; and the switching module is configured to automatically switch, according to the ordered queue of the multiple message reply windows, the first message reply window in the ordered queue to the message reply window placed on the top.

In a first implementation manner of the second aspect, the ordering module is configured to order the multiple message reply windows according to an ordering indicator to generate an ordered queue, where one of: a customer rating, a message type, a customer group, a customer waiting duration, and a black/white list is used as the ordering indicator.

In a second implementation manner of the second aspect, the apparatus further includes an adjusting module, where the adjusting module is configured to automatically adjust the ordering indicator according to statistics on effects of using the message reply window for a period of time.

In a third implementation manner of the second aspect, the ordering module is configured to order the multiple message reply windows according to ordering indicators to generate an ordered queue, where at least two of: a customer rating, a message type, a customer group, a customer waiting duration, and a black/white list are used as the ordering indicators.

In a fourth implementation manner of the second aspect, any one indicator of the at least two indicators includes a corresponding indicator weight; each ordering indicator among the customer rating, the message type, the customer group, the customer waiting duration, and the black/white list includes a score; and the ordering module is configured to order the multiple message reply windows according to a weighted sum of scores of the at least two indicators among the customer rating, the message type, the customer group, the customer waiting duration, and the black/white list to generate an ordered queue.

In a fifth implementation manner of the second aspect, the apparatus further includes an adjusting module, where the adjusting module is configured to automatically adjust a score of an ordering indicator among the customer rating, the message type, the customer group, the customer waiting duration, and the black/white list according to statistics on effects of using the message reply window for a period of time.

In a sixth implementation manner of the second aspect, the adjusting module is further configured to reselect the ordering indicator or update a weight included in the ordering indicator according to a setting.

In a seventh implementation manner of the second aspect, the ordering module is further configured to insert, in a customized ordering manner and in the ordering manner, a message reply window corresponding to a message received from a customer at a peer end into the ordered queue of the multiple message reply windows if the message of the customer at the peer end is received and the message reply window corresponding to the message of the customer is not included in the ordered queue of the multiple message reply windows.

In an eighth implementation manner of the second aspect, the apparatus further includes a receiving module, where the receiving module is configured to, before automatically switching the first message reply window in the ordered queue to the message reply window placed on the top, receive a trigger message for automatically switching the message reply window.

In the first implementation manner of the second aspect, a trigger message of a user for automatically switching the message reply window is received by receiving a mouse click operation, a single-point or multipoint touch operation, or a stylus pen click operation on the key for automatically switching a window.

In the embodiments of the present invention, according to a customized ordered queue, after a customer service person completes answering a reply window placed on the top from a customer, the first message reply window in the queue automatically switches to the message reply window placed on the top. This reduces the customer service person's operation of selecting a next reply window, and improves work efficiency of the customer service person, thereby helping improve customer satisfaction on a customer service system.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show only some embodiments of the present invention, and persons of ordinary skill in the art may still derive other drawings from these accompanying drawings without creative efforts.
FIG. 1 is a flowchart of an embodiment of a method for switching among multiple message reply windows according to the present invention;
FIG. 2a and FIG. 2b are a schematic diagram of a presentation of multiple message reply windows according to an embodiment of the present invention;
FIG. 3 is a flowchart of another embodiment of a method for switching among multiple message reply windows according to the present invention;
FIG. 4 is a flowchart of still another embodiment of a method for switching among multiple message reply windows according to the present invention;

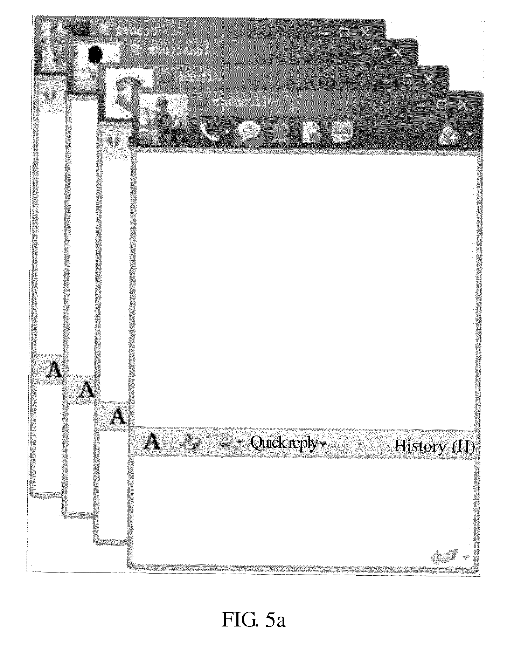

FIG. 5a and FIG. 5b are a schematic diagram of another presentation of multiple message reply windows according to an embodiment of the present invention;
FIG. 6 is a structural diagram of an embodiment of an apparatus for switching among multiple message reply windows according to the present invention;
FIG. 7 is a structural diagram of another embodiment of an apparatus for switching among multiple message reply windows according to the present invention;
FIG. 8 is a structural diagram of a device including any one of apparatuses according to an embodiment of the present invention; and
FIG. 9 is a structural diagram of an embodiment of a computer device for switching among multiple message reply windows according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

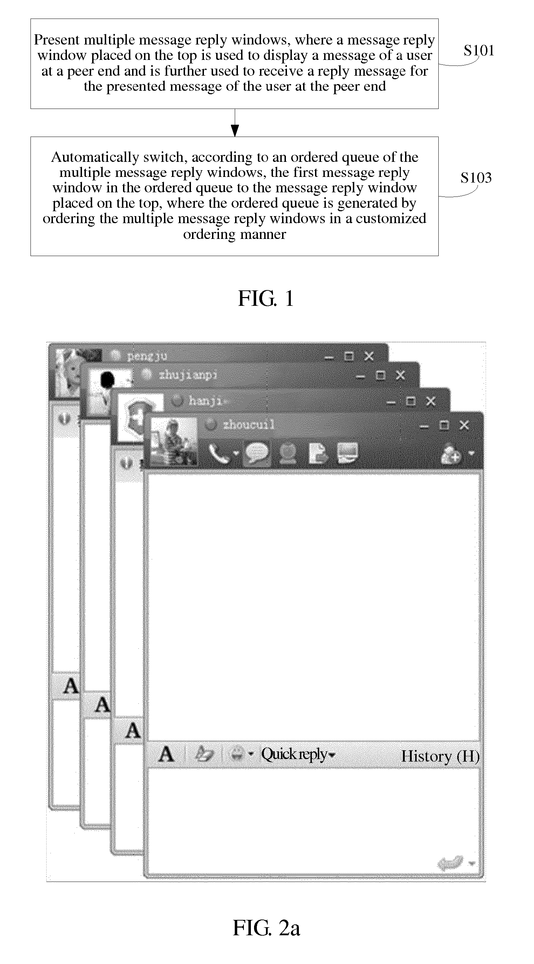

An embodiment of the present invention provides a method for switching among multiple message reply windows, and as shown in FIG. 1, FIG. 1 is a flowchart of an embodiment of a method for switching among multiple message reply windows according to the present invention. The method includes: S101. Present multiple message reply windows, where a message reply window placed on the top is used to display a message of a user at a peer end and is further used to receive a reply message for the presented message of the user at the peer end; and S103. Automatically switch, according to an ordered queue of the multiple message reply windows, the first message reply window in the ordered queue to the message reply window placed on the top, where the ordered queue is generated by ordering the multiple message reply windows in a customized ordering manner.

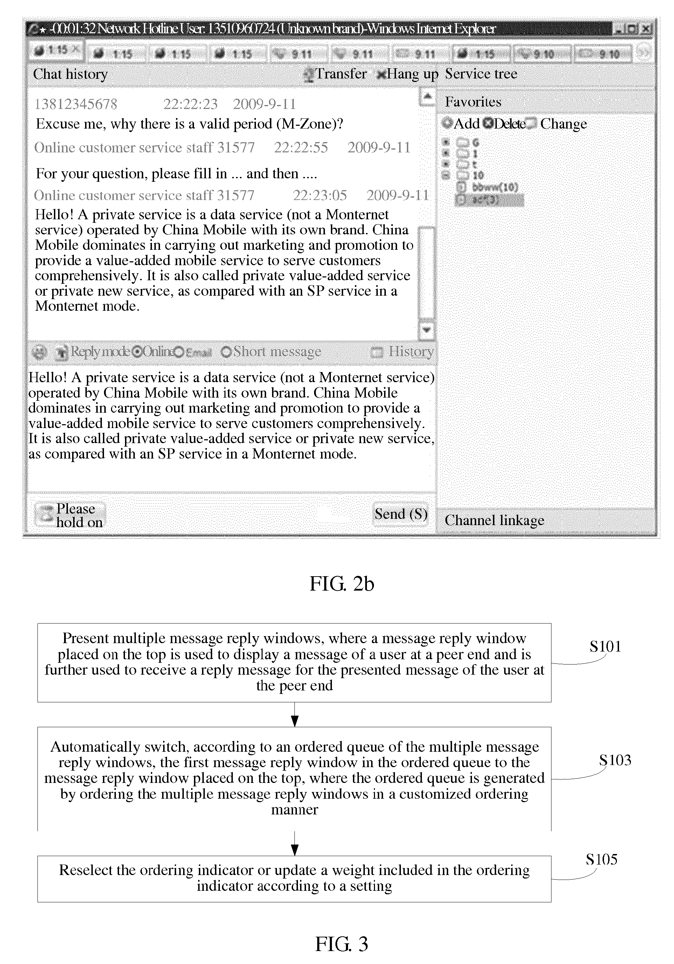

In an embodiment of the present invention, as shown in FIG. 2a and FIG. 2b, FIG. 2a and FIG. 2b are a schematic diagram of a presentation of multiple message reply windows according to an embodiment of the present invention. The multiple message reply windows are multiple independent message reply windows (as shown in FIG. 2a), or multiple message reply windows (as shown in FIG. 2b) that are integrated into one window in the form of multiple tabs TAB, or the like. A presentation manner includes but is not limited to the foregoing presentation manner. The message reply window on the top includes a message reply window where an input cursor is located, or a message reply window corresponding to a selected TAB.

In an embodiment of the present invention, that the ordered queue is generated by ordering the multiple message reply windows in a customized ordering manner includes that the ordered queue is generated by ordering the multiple message reply windows according to an ordering indicator, where one of: a customer rating, a message type, a customer group, a customer waiting duration, and a black/white list is used as the ordering indicator.

The ordering is performed in descending order of customer ratings. Alternatively, the ordering is performed in descending order of priorities of messages in a customer group. Alternatively, the ordering is performed in descending order of customer waiting durations. Alternatively, the ordering is performed from a whitelist to a blacklist. Alternatively, if the message type includes an instant message and a non-instant message, the ordering is performed from an instant message to a non-instant message. An ordering manner is not limited to the foregoing ordering manner. Persons skilled in the art can easily extend an ordering manner to another ordering manner according to an application requirement.

In an embodiment of the present invention, the method further includes automatically adjusting the ordering indicator according to statistics on effects of using the message reply window for a period of time.

For the period of time, a week, a month, or any period of time customized as required may be selected. The automatically adjusting the ordering indicator may be performed at any time of the method for switching among multiple message reply windows according to this embodiment of the present invention, for example, any time before or after the presenting multiple message reply windows, or any time before or after the automatically switching the first message reply window in the ordered queue to the message reply window placed on the top.

In an embodiment of the present invention, the statistics on effects of using the message reply window may be collected according to user satisfaction for a period of time, an average waiting duration within a period of time, or another indicator. If satisfaction of a high-priority user at a collected customer rating is lower than a lower limit of a threshold, or an average waiting duration is higher than an upper limit of a threshold, the customer rating is automatically adjusted as an ordering indicator to order the multiple message reply windows. Alternatively, if satisfaction of a high-priority user in a collected customer group is lower than a lower limit of a threshold, or an average waiting duration is higher than an upper limit of a threshold, the customer group is automatically adjusted as an ordering indicator to order the multiple message reply windows. If satisfaction of a user of an instant message as a message type is lower than a lower limit of a threshold, or an average waiting duration is higher than an upper limit of a threshold, the message type is automatically adjusted as an ordering indicator to order the multiple message reply windows. An automatically adjusting method is not limited to the foregoing method. Persons skilled in the art may easily figure out another adjusting manner without creative efforts.

In this embodiment of the present invention, any one indicator of the at least two indicators includes a corresponding indicator weight, each ordering indicator among the customer rating, the message type, the customer group, the customer waiting duration, and the black/white list includes a score, and that the ordered queue is generated by ordering the multiple message reply windows according to at least two indicators among a customer rating, a message type, a customer group, a customer waiting duration, and a black/white list specifically includes that the ordered queue is generated by ordering the multiple message reply windows according to a weighted sum of scores of the at least two indicators among the customer rating, the message type, the customer group, the customer waiting duration, and the black/white list.

In an embodiment of the present invention, that the ordered queue is generated by ordering the multiple message reply windows in a customized ordering manner includes that the ordered queue is generated by ordering the multiple message reply windows according to at least two indicators among a customer rating, a message type, or a customer waiting duration.

In an embodiment of the present invention, the at least two indicators are any one combination of at least two of the foregoing indicators. The at least two indicators are assigned different weights. For example, if there are three different indicators, the indicators are assigned a first weight, a second weight, and a third weight respectively. The assigned first weight, second weight, and third weight are the same or different from one another, and are set in a customized manner. For example, the first weight, the second weight, and the third weight are 10, 9, and 8 respectively; or the first weight, the second weight, and the third weight are 0.5, 0.3, and 0.2 respectively.

For example, the indicators such as different customer ratings, different customer groups, different message types, different customer waiting durations, blacklists, whitelists and blacklists, and the like are assigned different scores. For example, the scores are different and ranging from 0 to 10. A manner of assigning the scores may be set by a user or the scores adopt system default values. The ordering is performed in descending order according to weighted sums of scores of the indicators. For example, if scores corresponding to a customer rating, a customer group, and a customer waiting duration of a customer A are 9, 10, and 5 respectively and scores corresponding to a customer rating, a customer group, and a customer waiting duration of a customer B are 5, 6, and 8 respectively, and weights of a customer rating, a customer group, and a customer waiting duration are 10, 9, and 8 respectively, a weighted sum of the customer A is 9*10 + 10*9 + 5*8, and a weighted sum of the customer B is 5*10 + 6*9 + 8*8. The weighted sum of the customer A is greater than the weighted sum of the customer B, and therefore, the customer A is in front of the customer B in an ordered queue.

In another embodiment of the present invention, that the ordered queue is generated by ordering the multiple message reply windows according to ordering indicators, where at least two of: a customer rating, a message type, a customer group, a customer waiting duration, and a black/white list is used as the ordering indicators, includes that queues with different weights are generated according to different categories of indicators, and a queue is ordered according to a score of another indicator. During automatic switching, the first message reply window in an ordered queue with a higher weight automatically switches to a message reply window placed on the top.

For example: message types are classified into two categories, an instant message and a non-instant message; two queues with different weights are generated according to different categories of message types, where an instant-message queue has a higher weight, and a non-instant-message queue has a lower weight; and the ordering is performed in the instant-message queue and the non-instant-message queue according to a score of a customer waiting indicator. During automatic switching, the first message reply window in the instant-message ordered queue with a higher weight automatically switches to a message reply window placed on the top. If the message reply window in the instant-message ordered queue is blank, the first message reply window in the non-instant-message ordered queue with a lower weight automatically switches to a message reply window placed on the top. Two indicators are not limited to the foregoing manners, but may also be any two indicators among the foregoing different customer ratings, different customer groups, different message types, different customer waiting durations, blacklists, whitelists and blacklists.

In this embodiment of the present invention, the ordering may also be performed according to another indicator customized by another customer, but is not limited to the foregoing ordering manner.

In an embodiment of the present invention, the method further includes automatically adjusting a score of an ordering indicator among the customer rating, the message type, the customer group, the customer waiting duration, and the black/white list according to statistics on effects of using the message reply window for a period of time.

For the period of time, a week, a month, or any period of time customized as required may be selected. The adjusting a score of an ordering indicator among the customer rating, the message type, the customer group, the customer waiting duration, and the black/white list may be performed at any time of the method for switching among multiple message reply windows according to this embodiment of the present invention, for example, any time before or after the presenting multiple message reply windows, or any time before or after the automatically switching the first message reply window in the ordered queue to the message reply window placed on the top.

In an embodiment of the present invention, the statistics on effects of using the message reply window may be collected according to user satisfaction for a period of time, an average waiting duration within a period of time, or another indicator. If satisfaction of a high-priority user at a collected customer rating is lower than a lower limit of a threshold, or an average waiting duration is higher than an upper limit of a threshold, a score of the high-priority user at the customer rating automatically increases, or a score of a low-priority user at the customer rating automatically decreases. Alternatively, if satisfaction of a high-priority user in a collected customer group is lower than a lower limit of a threshold, or an average waiting duration is higher than an upper limit of a threshold, a score of the high-priority user in the customer group automatically increases, or a score of a low-priority user in the customer group automatically decreases. Alternatively, if satisfaction of a user of an instant message as a message type is lower than a lower limit of a threshold, or an average waiting duration is higher than an upper limit of a threshold, a score of a high-priority user of the message type automatically increases, or a score of a high-priority user of the message type automatically decreases. An automatically adjusting method is not limited to the foregoing method. Persons skilled in the art may easily figure out another adjusting manner without creative efforts.

The ordering indicator and a weight included in the ordering indicator are stored in a memory or a server database. The memory or the server database is queried through a processor to obtain the stored ordering indicator and the stored weight included in the ordering indicator, so as to implement any one of the technical solutions described in this embodiment of the present invention.

In an embodiment of the present invention, FIG. 3 is a flowchart of another embodiment of a method for switching among multiple message reply windows according to the present invention. After the automatically switching, according to an ordered queue of the message reply windows, the first message reply window in the ordered queue to the message reply window placed on the top, the method further includes: s105. Reselect the ordering indicator or update a weight included in the ordering indicator according to a setting.

In an embodiment of the present invention, the message reply window corresponding to a message received from a customer at a peer end is inserted into the ordered queue of the multiple message reply windows in a customized ordering manner if the message of the customer at the peer end is received and the message reply window corresponding to the message of the customer is not included in the ordered queue of the multiple message reply windows. Alternatively, before or after the message reply window corresponding to the message received from the customer at the peer end is inserted into the ordered queue of the multiple message reply windows, the method further includes presenting the message reply window corresponding to the message received from the customer at the peer end. The foregoing steps may be arranged in any position before or after S101, S103, or S105 shown in FIG. 3.

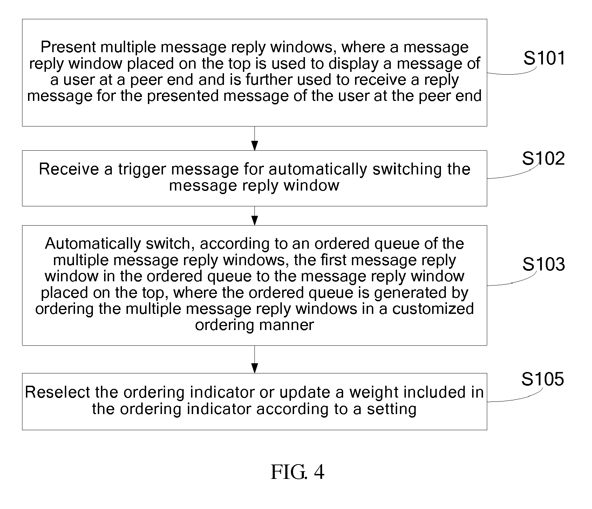

In an embodiment of the present invention, FIG. 4 is a flowchart of another embodiment of a method for switching among multiple message reply windows according to the present invention. Before the automatically switching, according to an ordered queue of the message reply windows, the first message reply window in the ordered queue to the message reply window placed on the top, the method further includes: S102. Receive a trigger message for automatically switching the message reply window.

In an embodiment of the present invention, FIG. 2a and FIG. 2b are aanother schematic diagram of a presentation of multiple message reply windows according to an embodiment of the present invention. The message reply window includes a key for automatically switching a window, and the receiving a trigger message of a user for automatically switching the message reply window includes: receiving, by receiving a mouse click operation, a single-point or multipoint touch operation, or a stylus pen click operation on the key for automatically switching a window, a trigger message of a user for automatically switching the message reply window.

If multiple users (including online text consultation/left message/email/short message) initiate online calls simultaneously at extreme short time intervals, all online customer service personnel connect consultations of multiple users and respond to all users simultaneously. In this way, a duration for serving active current user or think of which message reply window to respond to next does not need to be considered. In addition, pages do not keep shaking or prompting for responding as before. A customer service person only needs to click a button for automatically switching a window to implement one-click-switching or automatic switching to another customer.

In an embodiment of the present invention, the receiving a trigger message of a user for automatically switching the message reply window includes: receiving, in a keyboard control manner, a trigger message of a user for automatically switching the message reply window. The keyboard control manner includes a user-defined one key or combination of multiple keys.

In an embodiment of the present invention, the receiving a trigger message of a user for automatically switching the message reply window includes: receiving, in a voice control manner, a trigger message of a user for automatically switching the message reply window. The voice control manner includes a certain user-defined voice input. In this embodiment of the present invention, a voice input is captured through a microphone, and the voice input is identified, so as to determine whether it is the certain user-defined voice input.

In an embodiment of the present invention, the receiving a trigger message of a user for automatically switching the message reply window includes: receiving, in a gesture manner, a trigger message of a user for automatically switching the message reply window. The gesture manner includes: a certain user-defined gesture input. In this embodiment of the present invention, a gesture input is captured through a camera, and the gesture input is identified, so as to determine whether it is the certain user-defined gesture input.

In an embodiment of the present invention, the receiving a trigger message of a user for automatically switching the message reply window includes: receiving, in an eye movement control manner, a trigger message of a user for automatically switching the message reply window. The eye movement manner includes a certain user-defined eye movement input. In this embodiment of the present invention, an eye movement input is captured through a camera, and the eye movement input is identified, so as to determine whether it is the certain user-defined eye movement input.

With the method for switching among multiple message reply windows in the embodiments of the present invention, pressure on responding to network customer services is reduced. A customer service person does not need to manually select a next message reply window. The selection of a next message reply window can be automatically completed through an intelligent system, thereby reducing fatigue of the customer service person, and improving service efficiency and user satisfaction for network customer services.

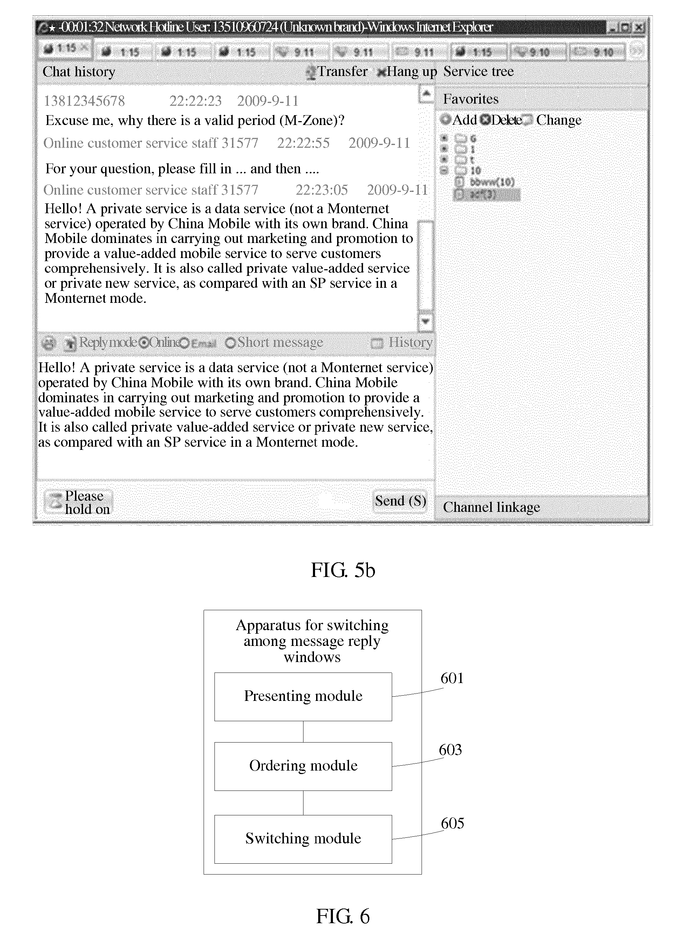

An embodiment of the present invention provides an apparatus for switching among multiple message reply windows. FIG. 6 is a structural diagram of an apparatus for switching among multiple message reply windows according to an embodiment of the present invention. The apparatus includes a presenting module 601, an ordering module 605, and a switching module 603. The presenting module is configured to present multiple message reply windows, where a message reply window placed on the top is used to display a message of a user at a peer end and is further used to receive a reply message for the presented message of the user at the peer end; the ordering module is configured to order the multiple message reply windows in a customized ordering manner to generate an ordered queue; and the switching module is configured to automatically switch, according to the ordered queue of the multiple message reply windows, the first message reply window in the ordered queue to the message reply window placed on the top.

In an embodiment of the present invention, the ordering module 605 is configured to order the multiple message reply windows according to an ordering indicator to generate an ordered queue, where one of: a customer rating, a message type, a customer group, a customer waiting duration, and a black/white list is used as the ordering indicator.

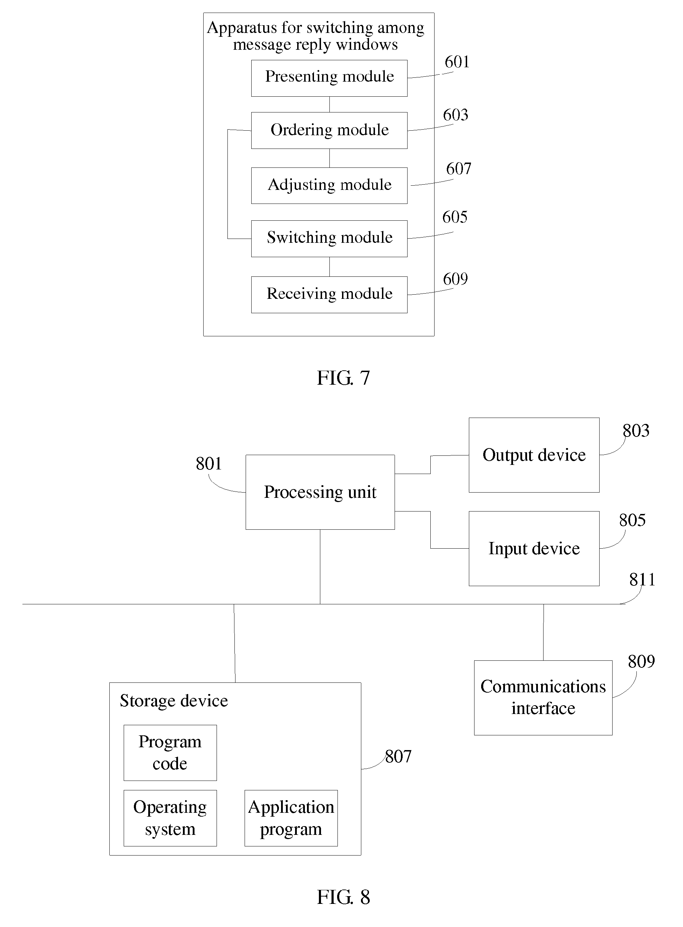

In an embodiment of the present invention, as shown in FIG. 7, FIG. 7 is a structural diagram of an apparatus for switching among multiple message reply windows according to an embodiment of the present invention. The apparatus further includes an adjusting module 607, where the adjusting module is configured to automatically adjust the ordering indicator according to statistics on effects of using the message reply window for a period of time.

In an embodiment of the present invention, the ordering module is configured to order the multiple message reply windows according to ordering indicators to generate an ordered queue, where at least two of: a customer rating, a message type, a customer group, a customer waiting duration, and a black/white list are used as the ordering indicators.

In an embodiment of the present invention, any one indicator of the at least two indicators includes a corresponding indicator weight; each ordering indicator among the customer rating, the message type, the customer group, the customer waiting duration, and the black/white list includes a score; and the ordering module is configured to order the multiple message reply windows according to a weighted sum of scores of the at least two indicators among the customer rating, the message type, the customer group, the customer waiting duration, and the black/white list to generate an ordered queue.

In an embodiment of the present invention, the apparatus further includes an adjusting module 607, where the adjusting module is configured to automatically adjust a score of an ordering indicator among the customer rating, the message type, the customer group, the customer waiting duration, and the black/white list according to statistics on effects of using the message reply window for a period of time.

In an embodiment of the present invention, the adjusting module is further configured to reselect the ordering indicator or update a weight included in the ordering indicator according to a setting.

In an embodiment of the present invention, the ordering module is further configured to insert, in a customized ordering manner and in the ordering manner, the message reply window corresponding to a message received from a customer at a peer end into the ordered queue of the multiple message reply windows if the message of the customer at the peer end is received and the message reply window corresponding to the message of the customer is not included in the ordered queue of the multiple message reply windows. Alternatively, in another embodiment of the present invention, the presenting module is further configured to present the message reply window corresponding to the message received from the customer at the peer end.

In an embodiment of the present invention, the apparatus further includes a receiving module 609, where the receiving module is configured to, before automatically switching the first message reply window in the ordered queue to the message reply window placed on the top, receive a trigger message for automatically switching the message reply window.

In an embodiment of the present invention, the message reply window includes a key for automatically switching a window and the receiving module is configured to: receive, by receiving a mouse click operation, a single-point or multipoint touch operation, or a stylus pen click operation on the key for automatically switching a window, a trigger message of a user for automatically switching the message reply window.

In an embodiment of the present invention, the receiving a trigger message of a user for automatically switching the message reply window includes: receiving, in a keyboard control manner, a trigger message of a user for automatically switching the message reply window.

In an embodiment of the present invention, the receiving module is configured to receive, in a voice control manner, a trigger message of a user for automatically switching the message reply window.

In an embodiment of the present invention, the receiving module is configured to receive, in a gesture control manner, a trigger message of a user for automatically switching the message reply window.

In an embodiment of the present invention, the receiving module is configured to receive, in an eye movement control manner, a trigger message of a user for automatically switching the message reply window.

In an embodiment of the present invention, a structural diagram of an apparatus for implementing the foregoing method in each embodiment of the present invention is further provided. The apparatus may be embedded in or be a microprocessor computer, for example, a general-purpose computer, a customized machine, or a portable device such as a mobile phone or a tablet. The apparatus is as shown in FIG. 8. FIG. 8 is a structural diagram of a device including any one of apparatuses according to an embodiment of the present invention. An embodiment of the present invention provides a device for switching among multiple message reply windows, where the switching device includes a processing unit 801, an input device 805, an output device 803, a storage device 807, and a communications interface 809. Component parts of the apparatus are coupled together by using a bus system 811. The bus system includes a data bus, a power bus, a control bus, and a status signal bus.

In an embodiment of the present invention, the memory is configured to store the code and instruction; the processor and the memory are coupled to invoke the code and instruction of the memory to implement the following method: Control the output device to present multiple message reply windows, where a message reply window placed on the top is used to display a message of a user at a peer end; receive, through the input device, a reply message for the message of the user at the peer end, where the message of the user at the peer end is presented on the message reply window placed on the top; and automatically switch, according to an ordered queue of the multiple message reply windows, the first message reply window in the ordered queue to the message reply window placed on the top, where the ordered queue is generated by ordering the multiple message reply windows in a customized ordering manner.

In an embodiment of the present invention, the communications interface is configured to receive the message of the user at the peer end, where the message of the user at the peer end is presented on the message reply window, and is further configured to send, the peer end, the reply message for the message of the user at the peer end.

The processing unit may be: a general-purpose central processing unit (central procession unit, CPU), an application specific integrated circuit (application specific integrated circuit, ASIC), a digital signal processor (DSP), a field programmable gate array (FPGA), or another programmable logic device. The input device includes a keyboard, a mouse, a touch input device, a microphone, or the like. The output device includes a display, a loudspeaker, or the like.

The storage device may be any available computer readable medium, including but not limited to: a read only memory (read only memory, ROM), a random access memory (random access memory, RAM), a disk storage (disk storage), a flash memory, a programmable read only memory or an electrically erasable programmable memory, a register, and a storage medium commonly known in the field. The storage device is configured to provide an instruction and data for the processing unit and is connected to the processing unit by using a bus.

The storage device stores an operating system, an application program, and a program code used for implementing this embodiment of the present invention. The operating system is used to control and implement a processing function executed by the processing unit. The application program includes a program code, such as word processing software or email software.

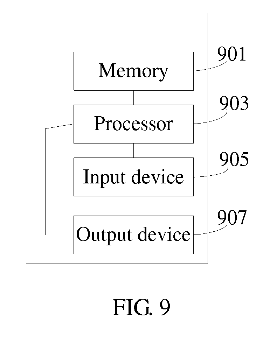

An embodiment of the present invention provides a computer device for switching among multiple message reply windows, as shown in FIG. 9. FIG. 9 is a structural diagram according to an embodiment of the present invention. The computer device includes a memory 901, a processor 903, an input device 905, and an output device 907. The memory is configured to store the code and instruction; the processor and the memory are coupled to invoke the code and instruction of the memory to implement the following method: Control the output device to present multiple message reply windows, where a message reply window placed on the top is used to display a message of a user at a peer end; receive, through the input device, a reply message for the message of the user at the peer end, where the message of the user at the peer end is presented on the message reply window placed on the top; and automatically switch, according to an ordered queue of the multiple message reply windows, the first message reply window in the ordered queue to the message reply window placed on the top, where the ordered queue is generated by ordering the multiple message reply windows in a customized ordering manner.

In this embodiment of the present invention, the processor coupled to the memory is further configured to invoke a code and an instruction of the memory, so as to implement the method described in any one of the foregoing embodiments.

In this embodiment of the present invention, the computer device includes a personal computer, a tablet computer, a mobile phone, or another device that can implement the foregoing function.

Persons skilled in the art may understand that an accompanying drawing is only a schematic diagram of an exemplary embodiment, and a module or procedure in the accompanying drawing is not necessary required for implementing the present invention.

Persons skilled in the art may understand that modules in the apparatus in the embodiments may be distributed, as described in the embodiments, in the apparatus in the embodiments, and may change accordingly and be located in one or more apparatuses different from the embodiments. Modules in the foregoing embodiments may be combined into one module, and may also be further split into multiple submodules.

Persons of ordinary skill in the art may understand that all or a part of the steps of the methods in the foregoing embodiments may be implemented by a program instructing relevant hardware. The program may be stored in a computer readable storage medium, and the storage medium may be a ROM/RAM, a magnetic disk, a compact disk, and the like.

Finally, it should be noted that the foregoing embodiments are only intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features of the technical solutions, as long as these modifications or replacements do not make the essence of corresponding technical solutions depart from the spirit and scope of the technical solutions in the embodiments of the present invention.

## Claims

1. A method for switching among multiple message reply windows, comprising: presenting multiple message reply windows, wherein a message reply window placed on the top is used to display a message of a user at a peer end and is further used to receive a reply message for the presented message of the user at the peer end; and automatically switching, according to an ordered queue of the multiple message reply windows, the first message reply window in the ordered queue to the message reply window placed on the top, wherein the ordered queue is generated by ordering the multiple message reply windows in a customized ordering manner.

2. The method according to claim 1, wherein that the ordered queue is generated by ordering the multiple message reply windows in a customized ordering manner comprises that the ordered queue is generated by ordering the multiple message reply windows according to an ordering indicator, wherein one of: a customer rating, a message type, a customer group, a customer waiting duration, and a black/white list is used as the ordering indicator.

3. The method according to claim 2, further comprising automatically adjusting the ordering indicator according to statistics on effects of using the message reply window for a period of time.

4. The method according to claim 1, wherein that the ordered queue is generated by ordering the multiple message reply windows in a customized ordering manner comprises that the ordered queue is generated by ordering the multiple message reply windows according to ordering indicators, wherein at least two of: a customer rating, a message type, a customer group, a customer waiting duration, and a black/white list are used as the ordering indicators.

5. The method according to claim 4, wherein any one indicator of the at least two indicators comprises a corresponding indicator weight, each ordering indicator among the customer rating, the message type, the customer group, the customer waiting duration, and the black/white list comprises a score, and that the ordered queue is generated by ordering the multiple message reply windows according to at least two indicators among a customer rating, a message type, a customer group, a customer waiting duration, and a black/white list specifically comprises that: the ordered queue is generated by ordering the multiple message reply windows according to a weighted sum of scores of the at least two indicators among the customer rating, the message type, the customer group, the customer waiting duration, and the black/white list.

6. The method according to claim 5, further comprising automatically adjusting a score of an ordering indicator among the customer rating, the message type, the customer group, the customer waiting duration, and the black/white list according to statistics on effects of using the message reply window for a period of time.

7. The method according to any one of claims 2 to 6, wherein, after the automatically switching, according to an ordered queue of the message reply windows, the first message reply window in the ordered queue to the message reply window placed on the top, the method further comprises reselecting the ordering indicator or updating a weight comprised in the ordering indicator according to a setting.

8. The method according to any one of claims 1 to 7, further comprising inserting, in a customized ordering manner and in the ordering manner, the message reply window corresponding to a message received from a customer at a peer end into the ordered queue of the multiple message reply windows if the message of the customer at the peer end is received and the message reply window corresponding to the message of the customer is not comprised in the ordered queue of the multiple message reply windows.

9. The method according to claim 8, further comprising presenting the message reply window corresponding to the message received from the customer at the peer end, if the message of the customer at the peer end is received and the message reply window corresponding to the message of the customer is not comprised in the ordered queue of the multiple message reply windows.

10. The method according to any one of claims 1 to 9, wherein, before the automatically switching, according to an ordered queue of the message reply windows, the first message reply window in the ordered queue to the message reply window placed on the top, the method further comprises receiving a trigger message for automatically switching the message reply window.

11. The method according to claim 10, wherein the message reply window comprises a key for automatically switching a window, and the receiving a trigger message of a user for automatically switching the message reply window comprises: receiving, by receiving a mouse click operation, a single-point or multipoint touch operation, or a stylus pen click operation on the key for automatically switching a window, a trigger message of a user for automatically switching the message reply window.

12. The method according to claim 10, wherein the receiving a trigger message of a user for automatically switching the message reply window comprises: receiving, in a keyboard control manner, a trigger message of a user for automatically switching the message reply window.

13. The method according to claim 10, wherein the receiving a trigger message of a user for automatically switching the message reply window comprises: receiving, in a voice control manner, a trigger message of a user for automatically switching the message reply window.

14. The method according to claim 10, wherein the receiving a trigger message of a user for automatically switching the message reply window comprises: receiving, in a gesture control manner, a trigger message of a user for automatically switching the message reply window.

15. The method according to claim 10, wherein the receiving a trigger message of a user for automatically switching the message reply window comprises: receiving, in an eye movement control manner, a trigger message of a user for automatically switching the message reply window.

16. An apparatus for switching among multiple message reply windows, comprising: a presenting module, a switching module, and an ordering module, wherein the presenting module is configured to present multiple message reply windows, wherein a message reply window placed on the top is used to display a message of a user at a peer end and is further used to receive a reply message for the presented message of the user at the peer end; the ordering module is configured to order the multiple message reply windows in a customized ordering manner to generate an ordered queue; and the switching module is configured to automatically switch, according to the ordered queue of the multiple message reply windows, the first message reply window in the ordered queue to the message reply window placed on the top.

17. The apparatus according to claim 16, wherein the ordering module is configured to order the multiple message reply windows according to an ordering indicator to generate an ordered queue, wherein one of: a customer rating, a message type, a customer group, a customer waiting duration, and a black/white list is used as the ordering indicator.

18. The apparatus according to claim 16 or 17, further comprising an adjusting module, wherein the adjusting module is configured to automatically adjust the ordering indicator according to statistics on effects of using the message reply window for a period of time.

19. The apparatus according to claim 16, wherein the ordering module is configured to order the multiple message reply windows according to ordering indicators to generate an ordered queue, wherein at least two of: a customer rating, a message type, a customer group, a customer waiting duration, and a black/white list are used as the ordering indicators.

20. The apparatus according to claim 19, wherein any one indicator of the at least two indicators comprises a corresponding indicator weight; each ordering indicator among the customer rating, the message type, the customer group, the customer waiting duration, and the black/white list comprises a score; and the ordering module is configured to order the multiple message reply windows according to a weighted sum of scores of the at least two indicators among the customer rating, the message type, the customer group, the customer waiting duration, and the black/white list to generate an ordered queue.

21. The apparatus according to claim 19 or 20, further comprising an adjusting module, wherein the adjusting module is configured to automatically adjust a score of an ordering indicator among the customer rating, the message type, the customer group, the customer waiting duration, and the black/white list according to statistics on effects of using the message reply window for a period of time.

22. The apparatus according to any one of claims 16 to 21, wherein the adjusting module is further configured to reselect the ordering indicator or update a weight comprised in the ordering indicator according to a setting.

23. The apparatus according to any one of claims 16 to 22, wherein the ordering module is further configured to insert, in a customized ordering manner and in the ordering manner, the message reply window corresponding to a message received from a customer at a peer end into the ordered queue of the multiple message reply windows if the message of the customer at the peer end is received and the message reply window corresponding to the message of the customer is not comprised in the ordered queue of the multiple message reply windows.

24. The apparatus according to any one of claims 16 to 22, wherein the presenting module is further configured to present the message reply window corresponding to the message received from the customer at the peer end, if the message of the customer at the peer end is received and the message reply window corresponding to the message of the customer is not comprised in the ordered queue of the multiple message reply windows.

25. The apparatus according to any one of claims 16 to 24, further comprising a receiving module, wherein the receiving module is configured to, before automatically switching the first message reply window in the ordered queue to the message reply window placed on the top, receive a trigger message for automatically switching the message reply window.

26. The apparatus according to claim 25, wherein the message reply window comprises a key for automatically switching a window and the receiving module is configured to: receive, by receiving a mouse click operation, a single-point or multipoint touch operation, or a stylus pen click operation on the key for automatically switching a window, a trigger message of a user for automatically switching the message reply window.

27. The apparatus according to claim 25, wherein the receiving a trigger message of a user for automatically switching the message reply window comprises: receiving, in a keyboard control manner, a trigger message of a user for automatically switching the message reply window.

28. The apparatus according to claim 25, wherein the receiving module is configured to receive, in a voice control manner, a trigger message of a user for automatically switching the message reply window.

29. The apparatus according to claim 25, wherein the receiving module is configured to receive, in a gesture control manner, a trigger message of a user for automatically switching the message reply window.

30. The apparatus according to claim 25, wherein the receiving module is configured to receive, in an eye movement control manner, a trigger message of a user for automatically switching the message reply window.
